# EUROPEAN PATENT SPECIFICATION

(11) **EP 2 889 873 B1**
(45) Date of publication and mention of the grant of the patent: **11.07.2018**
(21) Application number: 13833653.2
(22) Date of filing: 02.08.2013
(51) Int. Cl.: G09G 5/00, G09G 3/20, G09G 5/02, G06F 3/14, G02B 27/01, G09G 3/00

(54) **IMAGE DISPLAY DEVICE AND IMAGE DISPLAY METHOD, INFORMATION COMMUNICATION TERMINAL AND INFORMATION COMMUNICATION METHOD, AND IMAGE DISPLAY SYSTEM**
BILDANZEIGEVORRICHTUNG UND BILDANZEIGEVERFAHREN, INFORMATIONSKOMMUNIKATIONSENDGERÄT UND INFORMATIONSKOMMUNIKATIONSVERFAHREN SOWIE BILDANZEIGESYSTEM
DISPOSITIF ET PROCÉDÉ D'AFFICHAGE D'IMAGE, TERMINAL ET PROCÉDÉ DE TRANSMISSION D'INFORMATIONS ET SYSTÈME D'AFFICHAGE D'IMAGE

(30) Priority: 27.08.2012 JP 2012187028
(43) Date of publication of application: 01.07.2015
(73) Proprietor: Sony Corporation, Tokyo 108-0075 (JP)
(72) Inventor: MUKAWA, Hiroshi, Tokyo 108-0075 (JP)
(74) Representative: Witte, Weller & Partner Patentanwälte mbB
(86) International application number: PCT/JP2013/070978
(87) International publication number: WO 2014/034378

(56) References cited:
- EP-A2- 1 860 612
- WO-A1-2012/060039
- JP-A- 2002 032 212
- JP-A- 2006 189 476
- JP-A- 2007 065 899
- JP-A- 2008 005 460
- US-A1- 2002 015 008
- US-A1- 2007 046 805
- US-A1- 2012 200 592

## Description

### Technical Field

The technology disclosed in this specification relates to an image display device and image display method that enable a viewer to view an image, an information communication terminal and information communication method which is connected to the image display device and which is able to transmit and receive image data, and an image display system that includes the image display device and the information communication terminal. For example, the disclosed technology relates to an image display device and image display method which is used by being mounted on a viewer's head and which enables a viewer to view an image as an enlarged virtual image with a virtual image optical system, an information communication terminal and information communication method which is connected to the head-mounted image display device and which is able to transmit and receive image information data, and an image display system.

### Background Art

Head-mounted image display devices that are worn on the head and used to view images, or in other words, head-mounted displays, are known. A head-mounted image display device has an image display unit for each of the left and right eyes, for example, and by combining these with headphones, the head-mounted image display device is configured to enable control of visual perception and auditory perception. In addition, a head-mounted image display device is also capable of showing different images to the left and right eyes, and if an image with parallax between the left and right eyes is displayed, a three-dimensional image may be presented.

Head-mounted image display devices may be categorized into opaque and see-through types. An opaque head-mounted display device is configured to directly cover the user's eyes when mounted on the head, and increases immersion during image viewing (for example, see Patent Literature 1). On the other hand, in the case of a see-through head-mounted image display device, it is possible to look at the outside surroundings past the image (that is, see through the image) even while the user is wearing the device on his or her head and an image is being displayed (for example, see Patent Literature 2). For this reason, the user is able to avoid dangers such as collisions with obstacles while using the device outdoors or while walking.

Both the opaque and see-through types are similar in that the head-mounted image display device is equipped with a high-resolution micro-display made up of liquid crystal or organic electro-luminescence (EL) elements, for example, as the display unit for both the left and right eyes (or for a single eye), and enable a viewer to view a two-dimensional image displayed on the micro-display as an enlarged virtual image with a virtual image optical system.

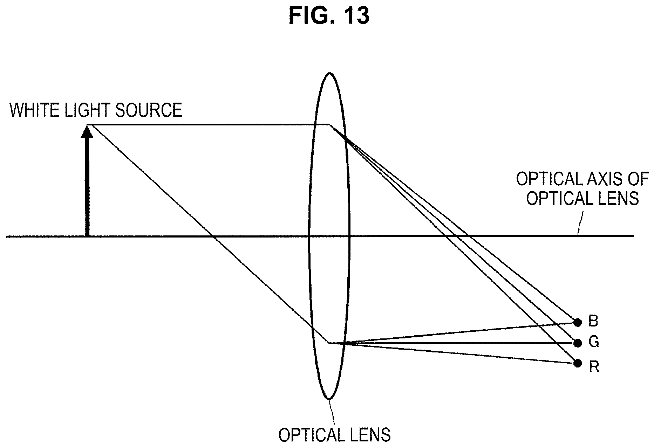

In the case of an opaque head-mounted image display device, an ocular lens is used to form an enlarged virtual image of a two-dimensional image, for example. In this case, since the diffraction of light is wavelength-dependent, optical lenses are known to have chromatic aberration of magnification. For this reason, when white light emitted from a certain position passes through a lens, an image is formed at locations that differ for each of the R, G, and B wavelength components (see FIG. 13), and color irregularity is perceived by the viewer. A method has been proposed to cancel image degradation due to optical causes such as the color irregularity produced by chromatic aberration with an electrical process of conducting an individual correction on the RGB per-color image signals to supply to the display panel (for example, see Patent Literature 3).

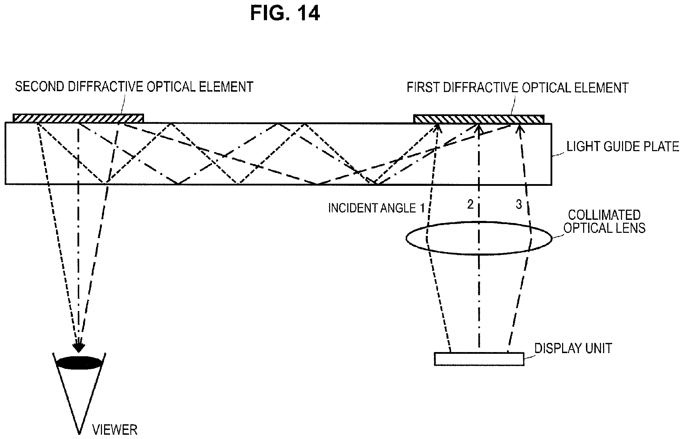

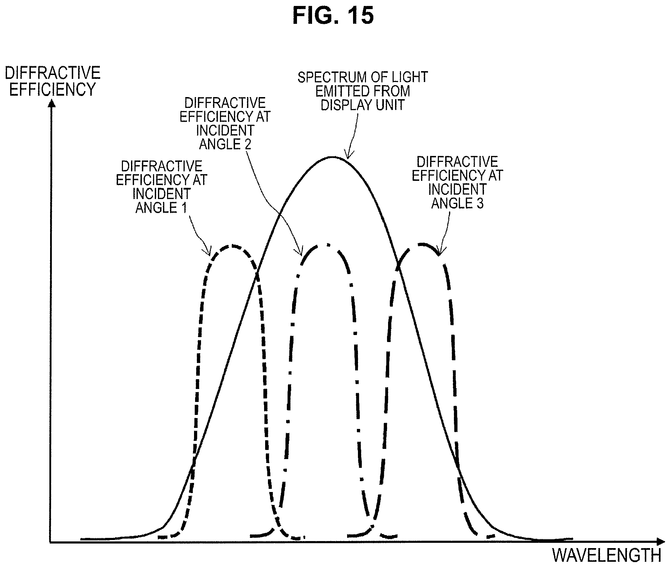

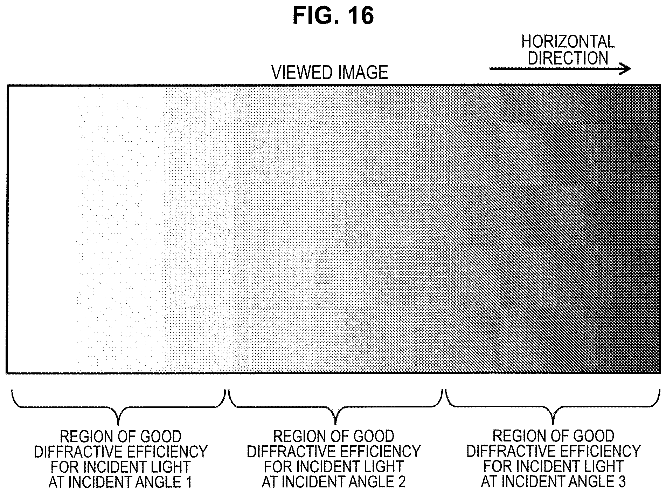

Meanwhile, in the case of a see-through head-mounted image display device, a method of using a diffractive optical element, typically a hologram, to form an enlarged virtual image of an image is known. Since a diffractive optical element has different diffraction angles depending on wavelength, when white light passes through a diffractive optical element, color breakup occurs in which the light disperses into separate R, G, and B wavelength components, and the enlarged virtual image viewed by the viewer becomes indistinct. Accordingly, a method has been proposed to use a combination of two of the same diffractive optical elements so that wavelength dispersal occurring when light is reflected by the first diffractive optical element is reverted back (that is, the color breakup is cancelled) when the light is reflected by the second diffractive element (see FIG. 14). Additionally, even if color breakup is optically cancelled, there is still the problem of different diffraction efficiency depending on the incident angle onto the diffractive optical element. In the example configuration illustrated in FIG. 14, when light of a specific wavelength (specific bandwidth) (for example, G) is emitted from the display panel, since the wavelengths with good diffraction efficiency vary depending on the incident angle onto the first diffraction grating (in other words, the location where light passes through a collimated optical lens) (see FIG. 15), the final enlarged virtual image becomes an image in which the wavelength varies depending on the horizontal position (see FIG. 16). Although described for the specific wavelength G, color irregularity is perceived when R, G, and B overlap. A method has been proposed to cancel image degradation such as the color irregularity optically produced in this way with an electrical process of conducting an individual correction on the RGB per-color image signals to supply to the display panel (for example, see Patent Literature 2).

Patent literature 4 relates to a technique for calibrating parameters associated with an imaging apparatus and a display apparatus. A head mounted unit may be identified by an identification ID. Data of the identification ID include distortion correction table data.

Patent literature 5 discloses a control device that controls an image display device that forms an image on the basis of an image signal. The control device comprises an acquiring unit that acquires, from the image display device, individual information for specifying a control form of the image display device connected to the control device; and a control unit that controls the image display device on the basis of the acquired individual information.

Patent literature 6 discloses an information processing system and an information processing method for searching information regarding an object seen by a user. Mobile equipment may include a sensor for acquiring biological information. A camera of the mobile equipment may be activated based on the biological information that is acquired.

To summarize, color irregularity occurring in an enlarged virtual image is caused by the properties of the virtual image optical system. Given that the optical properties differ for each individual lens, the correction coefficient used to correct color irregularity takes diverse values for each individual lens, and may be considered to be information that is unique to each device. When cancelling color irregularity with an electrical process, it is necessary to use a correction coefficient that differs for each lens.

Furthermore, for head-mounted image display devices of both the opaque and see-through types, it is typical to perform image correction processes before outputting to the micro-display for display, such as contrast adjustment and brightness adjustment, a gamma correction process, a dithering process, blanking time adjustment, and image inversion.

### Summary of Invention

### Technical Problem

An objective of the technology disclosed in this specification is to provide an excellent image display device and image display method, information communication terminal and information communication method.

### Solution to Problem

The present application has been achieved in the view of the above problem. The invention is defined in the appended claims. According to the first aspect of the present invention provides an image display device connected to an information communication terminal capable of transmitting and receiving image data, the image display device including a display unit that displays an image, an optical system that optically processes an image output from the display unit, or a sensor that detects information related to the image display device or a user of the image display device, a property information storage unit that stores property information related to the display unit, the optical system, or the sensor, and a control unit that includes a transmitting unit that transmits the property information to the information communication terminal and a receiving unit that receives information or an image processed on the basis of the property information on the information communication terminal side, and causes the display unit to display the processed image.

According to the second aspect of the present application, in the image display device according to the first aspect, the sensor is at least one of an acceleration sensor, a GPS sensor, a gyro sensor, a velocity sensor, a pressure sensor, a temperature sensor, a sweat sensor, a myoelectric sensor, an oculo-electric sensor, or a radiation sensor. Further, property information related to the display unit, the optical system, or the sensor is calibration information, a correction coefficient, a correction algorithm, or output information from the sensor.

Further, the third aspect of the present application provides an image display method in an image display device connected to an information communication terminal capable of transmitting and receiving image data, the image display device including a display unit that displays an image, and an optical system that optically processes an image output from the display unit, or a sensor that detects information related to the image display device or a user of the image display device, the image display method including a property information storing step that stores property information related to the display unit, the optical system, or the sensor, a transmitting step that transmits the property information to the information communication terminal, a receiving step that receives information or an image processed on the basis of the property information on the information communication terminal side, and a displaying step that displays the processed image on the display unit.

Further, the fourth aspect of the present application provides an image display device connected to an information communication terminal capable of transmitting and receiving image data, the image display device including a display unit that displays an image, an optical system that optically processes an image output from the display unit, or a sensor that detects information related to the image display device or a user of the image display device, an identification information storage unit that stores identification information unique to the image display device, and a control unit that includes a transmitting unit that transmits the identification information to the information communication terminal and a receiving unit that receives information or an image processed using property information related to the display unit, the optical system, or the sensor which is acquired on the basis of the identification information on the information communication terminal side, and causes the display unit to display the processed image.

Further, the fifth aspect of the present application provides an image display method in an image display device connected to an information communication terminal capable of transmitting and receiving image data, the image display device including a display unit that displays an image, and an optical system that optically processes an image output from the display unit, or a sensor that detects information related to the image display device or a user of the image display device, the image display method including an identification information storing step that stores identification information unique to the image display device, a transmitting step that transmits the identification information to the information communication terminal, a receiving step that receives information or an image processed using property information related to the display unit, the optical system, or the sensor which is acquired on the basis of the identification information on the information communication terminal side, and a displaying step that displays the processed image on the display unit.

Further, the sixth aspect of the present application provides an information communication terminal capable of transmitting and receiving image data and connected to an image display device that includes a display unit that displays an image, and an optical system that optically processes a display image of the display unit, or a sensor that detects information related to the image display device or a user of the image display device, the information communication terminal including a property information acquisition unit that acquires property information related to the display unit, the optical system, or the sensor from the image display device, an image processing unit that processes an image to provide to the image display device on the basis of the property information, and an image transmitting unit that transmits an image processed by the image processing unit to the image display device.

According to the seventh aspect of the present application, the image display device includes at least one of an acceleration sensor, a GPS sensor, a gyro sensor, a velocity sensor, a pressure sensor, a temperature sensor, a sweat sensor, a myoelectric sensor, an oculo-electric sensor, or a radiation sensor. The property information acquisition unit acquires calibration information, a correction coefficient, or a correction algorithm related to the display unit, the optical system, or the sensor of the image display device, or output information from the sensor, as the property information.

Further, the eighth aspect of the present application provides an information communication method of an information communication terminal capable of transmitting and receiving image data and connected to an image display device that includes a display unit that displays an image, and an optical system that optically processes a display image of the display unit, or a sensor that detects information related to the image display device or a user of the image display device, the information communication method including a property information acquiring step that acquires property information related to the display unit, the optical system, or the sensor from the image display device, an image processing step that processes an image to provide to the image display device on the basis of the property information, and an image transmitting step that transmits an image processed by the image processing step to the image display device.

Further, the ninth aspect of the present application provides an information communication terminal capable of transmitting and receiving image data, connected to an image display device that includes a display unit that displays an image, and an optical system that optically processes a display image of the display unit, or a sensor that detects information related to the image display device or a user of the image display device, the information communication terminal including an identification information acquisition unit that acquires identification information unique to the image display device from the image display device, an image processing unit that processes an image to provide to the image display device using property information related to the display unit, the optical system, or the sensor of the image display device acquired on the basis of the identification information, and an image transmitting unit that transmits an image processed by the image processing unit to the image display device.

Further, the tenth aspect of the present application provides an information communication method of an information communication terminal capable of transmitting and receiving image data and connected to an image display device that includes a display unit that displays an image, and an optical system that optically processes a display image of the display unit, or a sensor that detects information related to the image display device or a user of the image display device, the information communication method including an identification information acquiring step that acquires identification information unique to the image display device, an image processing step that processes an image to provide to the image display device using property information related to the display unit, the optical system, or the sensor of the image display device acquired on the basis of the identification information, and an image transmitting step that transmits an image processed by the image processing step to the image display device.

Further, the eleventh aspect of the present application provides an image display system including an image display device that includes a display unit that displays an image, an optical system that optically processes a display image of the display unit, or a sensor that detects information related to the image display device or a user of the image display device, and property information related to the optical system or the sensor, and an information communication terminal connected to the image display device and capable of transmitting and receiving image data. The information communication terminal acquires property information related to the display unit, the optical system, or the sensor from the image display device, and transmits an image processed on the basis of the property information to the image display device.

Note that the term "system" used herein refers to a logical assembly of multiple devices (or function modules that realize specific functions), and does not particularly specify whether or not the devices or function modules are contained within a single housing.

According to the twelfth aspect of the present application, in the image display system according to the eleventh aspect, the image display device includes at least one of an acceleration sensor, a GPS sensor, a gyro sensor, a velocity sensor, a pressure sensor, a temperature sensor, a sweat sensor, a myoelectric sensor, an oculo-electric sensor, or a radiation sensor. The information communication terminal acquires calibration information, a correction coefficient, or a correction algorithm related to the display unit, the optical system, or the sensor of the image display device, or output information from the sensor, as the property information.

Further, the thirteenth aspect of the present application provides an image display system including an image display device that includes a display unit that displays an image, an optical system that optically processes a display image of the display unit, or a sensor that detects information related to the image display device or a user of the image display device, and property information related to the optical system or the sensor, and an information communication terminal connected to the image display device and capable of transmitting and receiving image data. The information communication terminal acquires identification information unique to the image display device from the image display device, and transmits to the image display device an image processed using property information related to the display unit, the optical system, or the sensor acquired on the basis of the identification information.

### Advantageous Effects of Invention

According to the technology disclosed in this specification, it is possible to provide an excellent image display device and image display method, information communication terminal and information communication method, and image display system able to suitably process and present a two-dimensional image to be viewed by a viewer according to properties unique to the image display device.

Further objectives, features, and advantages of the technology disclosed in this specification will be clarified by a more detailed description based on the exemplary embodiments discussed hereinafter and the attached drawings.

### Brief Description of Drawings

[FIG. 1] FIG. 1 is a diagram schematically illustrating a configuration of an image display system 1 that includes an image display device 10 for enabling a viewer to view a two-dimensional image, and an information communication terminal 20 that provides image information to the image display device 10.
[FIG. 2] FIG. 2 is a diagram illustrating an exemplary internal configuration of a head-mounted image display device 10.
[FIG. 3] FIG. 3 is a diagram illustrating an exemplary internal configuration of a multifunctional mobile terminal as an information communication terminal 20.
[FIG. 4] FIG. 4 is a diagram illustrating an exemplary internal configuration of a head-mounted display with built-in mobile phone functions.
[FIG. 5] FIG. 5 is a diagram for describing an image providing method in the image display system 1.
[FIG. 6] FIG. 6 is a diagram illustrating an exemplary processing sequence when an image is provided by the information communication terminal 20 to the image display device 10 in the image display system 1.
[FIG. 7] FIG. 7 is a diagram illustrating a modification of FIG. 5.
[FIG. 8] FIG. 8 is a diagram for describing an image providing method in the image display system 1.
[FIG. 9] FIG. 9 is a diagram illustrating an exemplary processing sequence when an image is provided by the information communication terminal 20 to the image display device 10 in the image display system 1.
[FIG. 10] FIG. 10 is a diagram illustrating a modification of FIG. 8.
[FIG. 11A] FIG. 11A is a diagram for describing an image providing method in the image display system 1.
[FIG. 11B] FIG. 11B is a diagram for describing a modification of an image providing method in the image display system 1.
[FIG. 12] FIG. 12 is a diagram illustrating an exemplary processing sequence when an image is provided by the information communication terminal 20 to the image display device 10 in the image display system 1 corresponding to FIG. 11A.
[FIG. 13] FIG. 13 is a diagram for explaining chromatic aberration of magnification in an optical lens.
[FIG. 14] FIG. 14 is a diagram illustrating an exemplary configuration of a see-through head-mounted image display device.
[FIG. 15] FIG. 15 is a diagram illustrating differences in diffraction efficiency according to the incident angle when emitting light of a specific wavelength in the image display device illustrated in FIG. 14.
[FIG. 16] FIG. 16 is a diagram illustrating a viewed image from the image display device illustrated in FIG. 14.
[FIG. 17] FIG. 17 is a diagram schematically illustrating a sequence of image correction processes.

### Description of Embodiments

Hereinafter, an embodiment of the technology disclosed in this specification will be described in detail and with reference to the drawings.

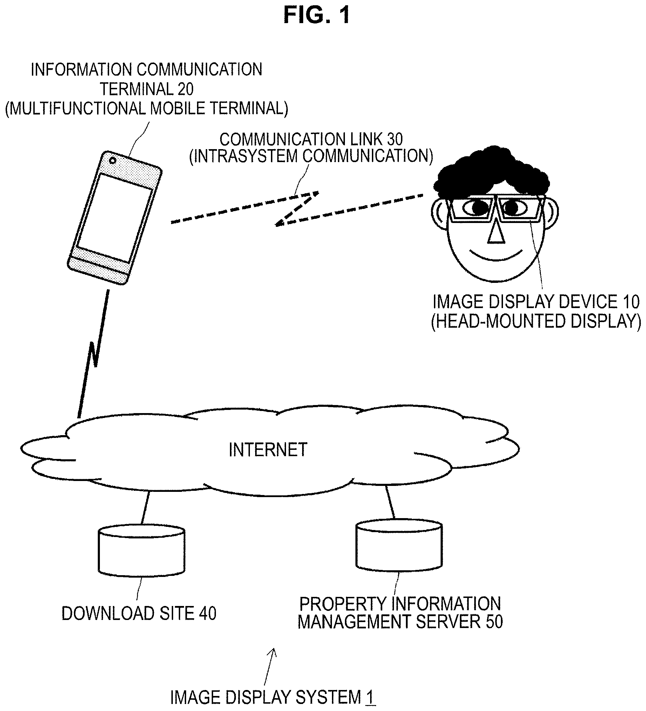

FIG. 1 schematically illustrates a configuration of an image display system 1 that includes an image display device 10 for enabling a viewer to view a two-dimensional image, and an information communication terminal 20 that provides image information to the image display device 10.

The image display device 10 and the information communication terminal 20 are interconnected via a predetermined communication link 30. For example, a communication link 30 based on a communication standard such as Mobile High-Definition Link (MHL), Universal Serial Bus (USB), High-Definition Multimedia Interface (HDMI; registered trademark), a wireless local area network (LAN) such as Wi-Fi, Bluetooth (registered trademark) communication, or infrared communication may be used for interconnection.

In addition, the information communication terminal 20 may also connect to the Internet and acquire necessary information from various servers. Note that although the image display device 10 may also be equipped with an Internet connectivity function, but such a function is not required to realize the technology disclosed in this specification.

The image display device 10 is an opaque or see-through head-mounted image display device that a viewer of an image wears to use. The image display device 10 forms a two-dimensional image on the basis of image information provided by the information communication terminal 20, and enables the viewer to view an enlarged virtual image of the two-dimensional image via a virtual image optical system.

Also, the information communication terminal 20 is a multifunctional information terminal such as a smartphone. The information communication terminal 20 that acts as a multifunctional information terminal is able to execute various applications under an execution environment provided by an operating system such as Android OS, for example. In addition, the information communication terminal 20 that acts as a multifunctional information terminal may connect to the Internet and acquire various applications from a download site 40 such as Android Market, for example.

The image information that the information communication terminal 20 provides to the image display device 10 may be an image captured using a built-in camera, a broadcast image received with a 1seg tuner, a streaming image received from a network, an image played back from a storage unit (including an inserted memory card), or the like. In the present embodiment, the information communication terminal 20 applies required processing to the image information on the basis of property information unique to the image display device 10, and then transmits the image information to the image display device 10. Besides the case of the information communication terminal 20 directly acquiring property information about the image display device 10 from the image display device 10 itself, the case of acquiring property information by querying a property information management server 50 on the Internet is also envisioned. An image providing process based on property information will be discussed in detail later.

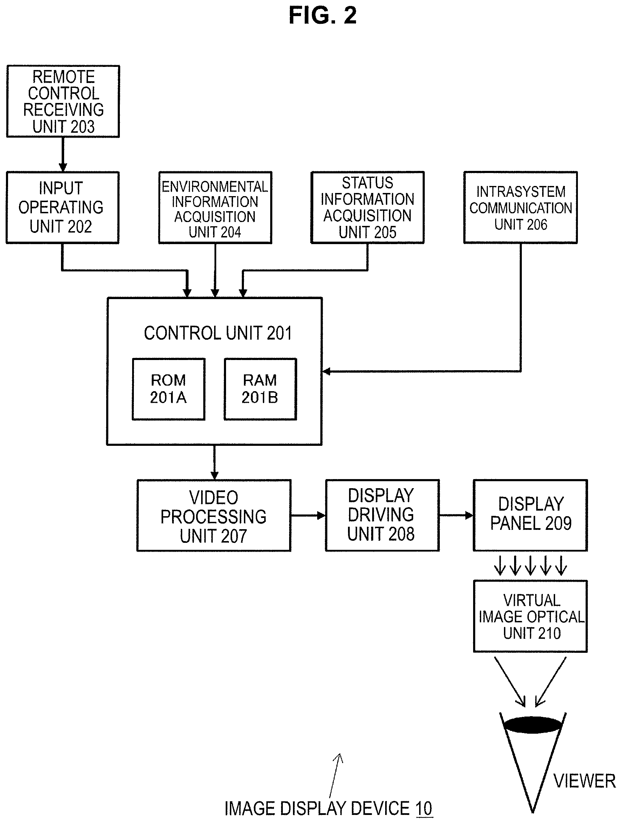

FIG. 2 illustrates an exemplary internal configuration of a head-mounted image display device 10. Hereinafter, the respective components will be described.

The control unit 201 is equipped with read-only memory (ROM) 201A and random access memory (RAM) 201B. The ROM 201A stores program code executed by the control unit 201, and various data. The control unit 201, by executing a program loaded into the RAM 201B, controls the display of images as well as centrally controlling the operation of the relevant device 10 overall. The data stored in the ROM 201A may be data such as identification information that identifies the relevant device 10, property information unique to each device, such as the optical properties of the virtual image optical unit 210, correction information used to correct an image signal according to optical properties (including calibration information, correction coefficients, and correction algorithms), and correction information used for image correction (including gamma correction coefficients used for gamma correction, dither coefficients used in a dithering process, and correction algorithms). In addition, in the case of equipping the image display device 10 with various environmental sensors that acquire environmental information related to the surrounding environment outside the image display device 10 to be discussed later, or various status sensors that acquire status information related to the status of the user who uses the image display device 10, correction information used to correct output information from these sensors may also be stored in the ROM 201A.

The input operating unit 202 is equipped with one or more operating elements on which the user performs an input operation, such as keys, buttons, and switches, receives user instructions via the operating elements, and outputs to the control unit 201. Also, the input operating unit 202 similarly receives user instructions made up of remote control commands received by the remote control receiving unit 203, and outputs to the control unit 201.

The environmental information acquisition unit 204 acquires environmental information related to the surrounding environment outside the image display device 10, and outputs to the control unit 201. The environmental information acquisition unit 204 acquires information such as environmental light intensity, acoustic intensity, position or location, temperature, weather, time, and an ambient image as the environmental information, for example. In addition, in order to acquire this environmental information, the environmental information acquisition unit 204 may also be equipped with various environmental sensors such as a light sensor, a microphone, a Global Positioning System (GPS) sensor, a temperature sensor, a humidity sensor, a clock, an image sensor (camera), and a radiation sensor (none illustrated in FIG. 2). Alternatively, the image display device 10 itself may not be equipped with environmental sensors, and the environmental information acquisition unit 204 may be configured to acquire environmental information from an external device equipped with environmental sensors (not illustrated). The acquired environmental information are values that depend on factors such as the installation location of the relevant device 10, and are temporarily held in the RAM 201B as property information, for example.

The status information acquisition unit 205 acquires status information related to the status of the user who uses the image display device 10, and outputs to the control unit 201. For the status information, the status information acquisition unit 505 acquires the user's work status (whether or not the user is wearing the device), the user's action status (the orientation of the wearing user's head, movement such as walking, and the open/closed state of the eyelids), mental status (indicating whether or not the user is immersed in or concentrating on viewing an internal image, such as excitement level, alertness level, or feelings and emotions), as well as the physiological state, for example. In addition, in order to acquire this status information from the user, the status information acquisition unit 205 may also be equipped with various status sensors such as a wear sensor made up of a mechanical switch and the like, a gyro sensor, an acceleration sensor, a velocity sensor, a pressure sensor, a body temperature sensor, a sweat sensor, a myoelectric sensor, an oculo-electric sensor, and a brain wave sensor (none illustrated in FIG. 2). Alternatively, the image display device 10 itself may not be equipped with status sensors, and the status information acquisition unit 205 may be configured to acquire status information from an external device equipped with status sensors (not illustrated). The acquired status information is temporarily held in the RAM 201B, for example, as property information caused by the individual variation of the user wearing the relevant device 10.

The intrasystem communication unit 206 conducts a communication process with another device such as the information communication terminal 20 within the image display system 1, as well as modulation/demodulation and coding/decoding processes on communication signals. For example, the intrasystem communication unit 206 receives an image signal for display output from the information communication terminal 20. An image that has been received, demodulated, and decoded by the intrasystem communication unit 206 or other received data is provided to the control unit 201. Also, the control unit 201 delivers data to be transmitted to another device within the system 1, such as the information communication terminal 20, via the intrasystem communication unit 206.

The configuration of the intrasystem communication unit 206 is arbitrary. For example, the intrasystem communication unit 206 may be configured according to a communication standard used by the communication link 30 within the image display system 1, and may conduct bidirectional communication with the information communication terminal 20. The communication standard may be either wired or wireless. The communication standard referred to herein may be a communication standard such as MHL, USB, HDMI (registered trademark), wireless LAN, Bluetooth (registered trademark), or infrared communication.

The video processing unit 207 additional conducts signal processing such as image quality correction on an image signal output from the control unit 201, and also converts the image signal to a resolution suited to the screen of the display panel 209. Subsequently, the display driving unit 208 sequentially selects the pixels of the display panel 209 every row while performing line-sequential scanning, and supplies a pixel signal based on the processed image signal.

The display panel 209 is made up a micro-display such as organic EL elements or a liquid crystal display, for example. The virtual image optical unit 210 enlarges and projects the display image of the display panel 209, enabling the user to view the display image as an enlarged virtual image. Note that in FIG. 2, only one display panel 209 and one corresponding virtual image optical unit 210 are illustrated for the sake of simplicity, but in the case in which the image display device 10 is a binocular head-mounted display, a display panel 209 and a virtual image optical unit 210 are provided for each of the left and right eyes.

If the image display device 10 is a shielded head-mounted display, the virtual image optical unit 210 is made up of an ocular lens. An optical lens has chromatic aberration of magnification, which becomes a factor causing color irregularity in the enlarged virtual image viewed by the viewer. Color irregularity may be cancelled by an electrical process of conducting an individual correction on the RGB per-color image signals to supply to the display panel 209 (discussed earlier). The correction coefficient for each of the colors R, G, and B used in the correction process is a value unique to the optical lens used as the virtual image optical unit 210, and in the present embodiment, is treated as property information of the image display device 10. In addition, besides correction coefficients, this type of property information may also include calibration information and correction algorithms used for correction.

Meanwhile, if the image display device 10 is a see-through head-mounted display, the virtual image optical unit 210 is made up of a diffractive optical element or the like. The diffraction efficiency of a diffractive optical element varies according to the incident angle, which becomes a factor causing color irregularity in the enlarged virtual image viewed by the viewer. Color irregularity may be cancelled by an electrical process of conducting an individual correction on the RGB per-color image signals to supply to the display panel 209 (discussed earlier). The correction coefficient for each of the colors R, G, and B used in the correction process is a value unique to the optical lens used as the virtual image optical unit 210, and in the present embodiment, is treated as property information of the image display device 10. In addition, besides correction coefficients, this type of property information may also include calibration information and correction algorithms used for correction.

Regardless of whether the image display device 10 is an opaque or a see-through head-mounted display, correction information based on the optical properties of the virtual image optical unit 210 (calibration information, correction coefficients, and correction algorithms) is stored in the RAM 201B as property information.

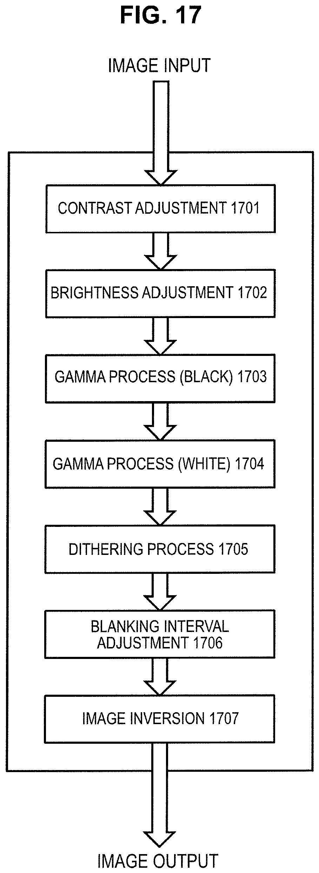

In addition, it is necessary to conform with the driving method of the micro-display used as the display panel 209, and also conduct various image correction processes that correct or adjust the image signal to achieve a natural display image. FIG. 17 schematically illustrates a sequence of image correction processes of this type. Hereinafter, each process will be described. The contrast adjustment 1701 is a process that changes the difference between the lightness and darkness of chroma. The brightness adjustment 1702 is a process that adjusts luma, or in other words, lightness and darkness. The gamma correction processes 1703 and 1704 are processes that respectively adjust black regions and white regions with a gamma curve that depends on differences between display systems or user preferences. The dithering process 1705 is a gradation adjustment, and uses the neighboring pixels of a pixel to create an apparent gradation expression that is richer than the current bit depth (8-bit). The blanking interval adjustment 1706 is a process that adjusts the blanking interval (when no image is output) between frames, and inserts a black signal into the blanking interval. The image inversion process 1707 performs a mirroring process on an input image to generate a mirror image.

Typically, at least one of the above processes 1701 to 1707 is performed. When applied to the image display system 1 illustrated in FIG. 1, image correction processes such as the above processes 1701 to 1707 may be conducted by any of the control unit 201, the video processing unit 207, and the display driving unit 208 in the image display device 10. However, the computational load is high for the gamma processes 1703 and 1704 and the dithering process 1705 in particular, and the burden of conducting these processes on the image display device 10 becomes excessive. In contrast, a method that conducts image correction processes such as the above processes 1701 to 1707 on the side of the information communication terminal 20 that provides image information to the image display device 10 is also conceivable.

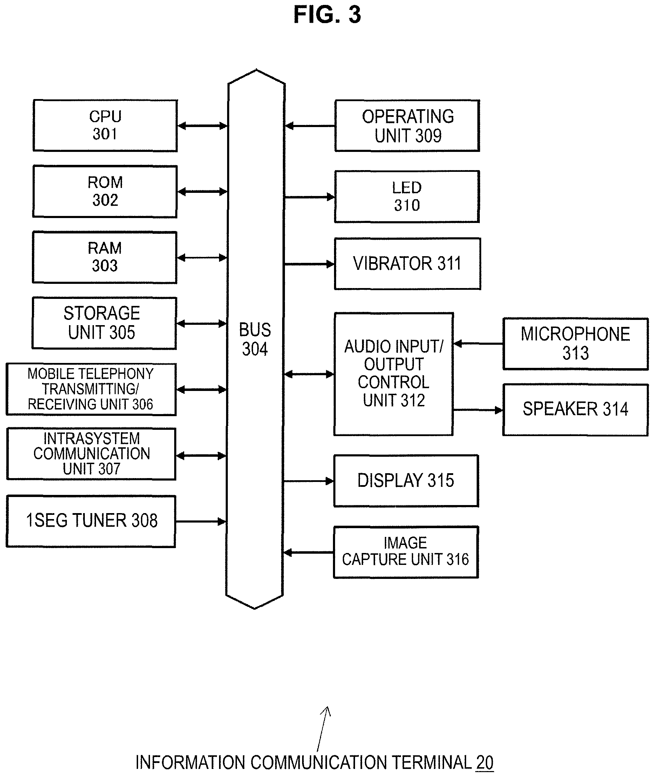

FIG. 3 illustrates an exemplary internal configuration of a multifunctional mobile terminal as an information communication terminal 20. Hereinafter, the respective components will be described.

The central processing unit (CPU) 301 executes a program stored in the ROM 302 or a program loaded into the RAM 303 from the storage unit 1004. The RAM 303 stores information as appropriate, such as data required for the CPU 301 to execute various processes.

In the present embodiment, applications executed by the CPU 301 may be applications that respectively execute processes such as a process of capturing a moving image or a still image using a built-in camera, a process of receiving a 1seg broadcast, a process of receiving a streaming image via a network, a process of playing back images stored in the storage unit 304, a process of displaying navigation information, a process of transmitting image information to another device within the image display system 1, such as the image display device 10, and a process such as correcting information to transmit to the image display device 10, such as image data, on the basis of property information of the image display device 10. Also, the existence of a single application that combines two or more processing functions is also anticipated.

There is also a method of executing a process such as correcting information transmitted to the image display device 10 in the image display device 10 internally, without using resources on the information communication terminal 20 side, such as the CPU 201. In the present embodiment, resources are used on the information communication terminal 20 side for this type of process because a multifunctional information terminal such as a smartphone is equipped with a processor manufactured with the latest loss process technology and having high computational power with low power consumption, and thus is considered to be suited to compute-intensive processes such as image correction.

Note that a program executed by the CPU 301 may be an operating system such as Android OS, or an application that operates in an execution environment provided by an operating system, for example. Additionally, besides being preinstalled in the relevant device 20, an application to execute may be acquired from a download site such as Android Market.

The CPU 301, ROM 302, and RAM 303 are interconnected by a bus 304. Also connected to the bus 304 are components such as a storage unit 305, a mobile telephony transmitting/receiving unit 306, an intrasystem communication unit 307, a 1seg tuner 308, an operating unit 309, a light-emitting diode (LED) 310, a vibrator 311, an audio input/output control unit 312, a display 315, and an image capture unit 316.

The storage unit 305 is made up of a comparatively high-capacity storage device such as a solid-state drive (SSD) or a hard disk drive (HDD), and is used to store various data, such as applications executed by the CPU 301, 1seg broadcast content received by the 1seg tuner 308, and image content such as moving images and still images captured by the image capture unit 316. Additionally, although omitted from the drawings for the sake of simplicity, assume that an externally inserted memory card is also included in the storage unit 305.

The mobile telephony transmitting/receiving unit 306 acts as a completely functional cellular radio transceiver, and may operate according to an arbitrary established standard, including standards such as Wideband Code Division Multiple Access (W-CDMA) and Long Term Evolution (LTE), for example.

The external network communication unit 317 connects to a network outside the image display system 1, such as the Internet. The external network communication unit 317 connects to the Internet via the nearest access point (not illustrated) by a wireless LAN such as Wi-Fi, for example. Obviously, the external network communication unit 317 may also use a wired rather than a wireless LAN. Also, the above mobile telephony transmitting/receiving unit 306 may also double as the external network communication unit 317.

The intrasystem communication unit 307 conducts a communication process via the communication link 30 within the image display system 1. The configuration of the intrasystem communication unit 307 is arbitrary. For example, the intrasystem communication unit 307 may be configured according to a communication standard used by the communication link 30 within the image display system 1, and may conduct bidirectional communication with the image display device 10. The communication standard may be either wired or wireless. The communication standard referred to herein may be a communication standard such as MHL, USB, HDMI (registered trademark), wireless LAN, Bluetooth (registered trademark), or infrared communication. Alternatively, the external network communication unit 317 may also function as the intrasystem communication unit 307, and be configured to conduct intrasystem communication via a mobile phone network.

The 1seg tuner 308 receives a Quarter Video Graphic Array (QVGA) broadcast signal to which one segment of a digital terrestrial television broadcast is assigned.

The operating unit 309 is made up of components such as buttons and a jog dial, and receives an operation from the user of the relevant device 20. The user operation may be the input of a phone number or the configuration of various settings, as well as the launching of an application, an instruction to transmit information to the image display device 10, and the like. The LED 310 emits light to draw the user's attention to the relevant information device when presenting information to the user, for example. Also, the vibrator 311 imparts vibration to the housing of the relevant device 20 to draw the user's attention when a phone call or email message arrives or the like.

The microphone 313 converts the user's speech into an electrical audio signal, while the speaker 314 converts an audio signal into an audible signal that the user can hear. The audio input/output control unit 312 supplies a basic analog output signal to the speaker 314, and also accepts analog audio input from the microphone 313.

When the relevant device 20 is being used as an ordinary mobile phone, the display 315 enables a number dialed by the operator, an image, the call status, menu options, and other service information to be seen. Also, during image captured by the image capture unit 316, the display 315 may be used for the display, playback, and output of a through-the-lens image or a captured image.

The image capture unit 316 is equipped with a built-in camera made up of an optical system and an image sensor such as a charge-coupled device (CCD), and an image processor that processes an image capture signal from the built-in camera (none illustrated). The optical system is made up of a single lens or multiple lenses, and the image sensor acquires an image formed by the optical system. The image processor processes compressed image data or a raw image acquired by the image sensor for storage in the storage unit 305, display output to the display 315, or transmission by the mobile telephony transmitting/receiving unit 306 or the intrasystem communication unit 307.

Note that a head-mounted display with built-in mobile phone functions is also anticipated as a format in which the image display device 10 is commercially released as a product. Conceptually, a head-mounted display with built-in mobile phone functions is the image display device 10 and the information communication terminal 20 configured as a single device.

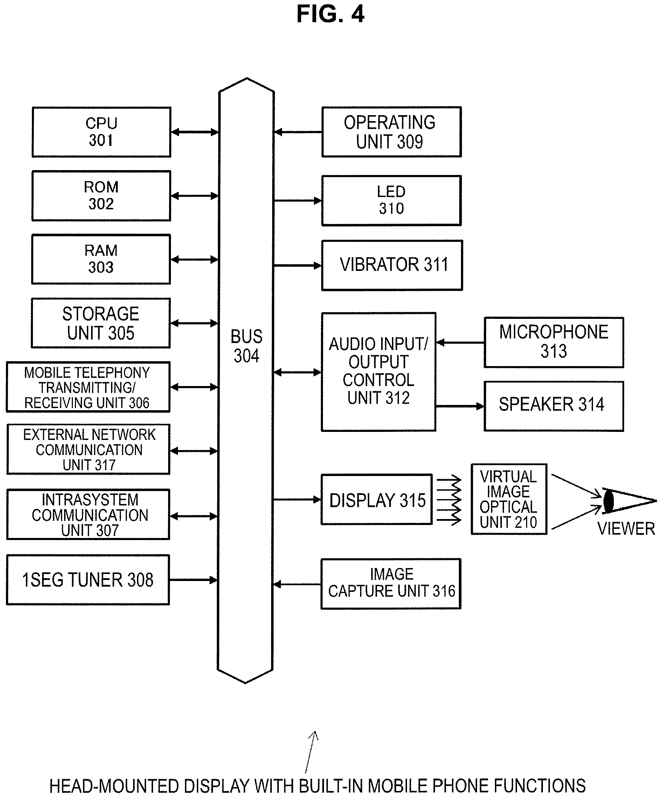

FIG. 4 illustrates an exemplary internal configuration of a head-mounted display with built-in mobile phone functions. The device illustrated in FIG. 3 is configured so that the virtual image optical unit 210 is disposed in front of the display screen of the display 315. The virtual image optical unit 210 enlarges and projects a display image, which is perceived as an enlarged virtual image by the user. Also, correction information (calibration information, correction coefficients, and correction algorithms) for conducting color irregularity correction on an image based on the optical properties of the virtual image optical unit 210, other device-unique property information, and a device ID that identifies the device is stored in the ROM 302.

As discussed earlier, regardless of whether the image display device 10 is an opaque or a see-through head-mounted display, color irregularity occurs in the enlarged virtual image viewed by the viewer, due to the optical properties of the virtual image optical unit 210. This color irregularity may be cancelled by an electrical process of conducting an individual correction on the RGB per-color image signals to supply to the display panel 209.

The color irregularity correction process is highly compute-intensive. For example, in the case of a see-through head-mounted display, correction coefficients made up of 3-row by 1-column matrices computed for each pixel in the horizontal direction must by multiplied by each pixel (for example, see Patent Literature 2).

In addition, it is necessary to conform with the driving method of the micro-display used as the display panel 209, and also conduct various image correction processes that correct or adjust the image signal to achieve a natural display image (discussed earlier; see also FIG. 17). This type of image correction includes compute-intensive processes such as gamma correction and a dithering process, for example.

Consequently, in the present embodiment, the information communication terminal 20 is configured to acquire correction information for the virtual image optical unit 210 of the image display device 10 and correction information for image correction, conduct a color irregularity correction computational process and image correction on the side of the information communication terminal 20 equipped with a processor having high computational power with low power consumption, and then provide corrected image information to the image display device 10.

Note that the information communication terminal 20 may be configured to conduct an image correction process by having the CPU 301 executing an application, or be equipped with dedicated hardware for image correction processing.

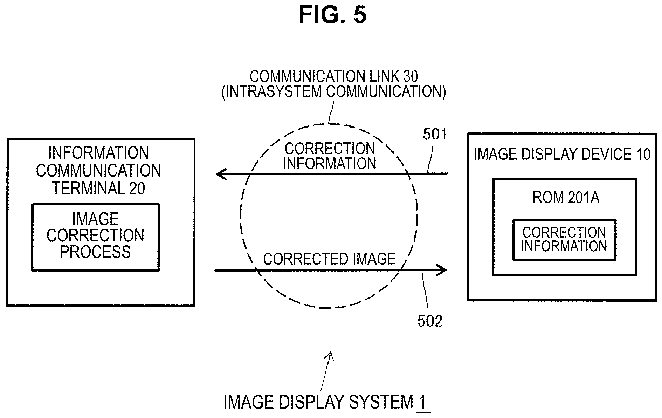

For example, as illustrated in FIG. 5, the image display device 10 stores correction coefficients in the ROM 201A, and when requesting an image from the information communication terminal 20, transmits correction information read out from the ROM 201A (including calibration information, correction coefficients, and correction algorithms for correcting color irregularity produced by the virtual image optical unit 210, or correction coefficients (such as gamma correction coefficients and dither coefficients) and correction algorithms used for image correction) via the communication link 30 (reference number 501). In response, the information communication terminal 20 conducts computations for color irregularity correction and image correction in accordance with the received correction information, and transmits image information to the image display device 10 via the communication link 30 (reference number 502). On the image display device 10 side, the received image information is displayed on the display panel 209, enabling the viewer to view an enlarged virtual image with the virtual image optical unit 210. In this enlarged virtual image, color irregularity is cancelled out. Also, an image signal suited to the micro-display driving method used as the display panel 209 is provided, and a more natural image is displayed by the display panel 209.

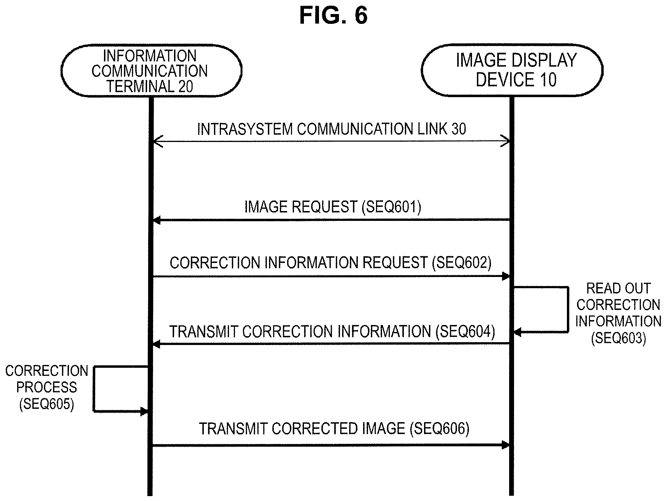

FIG. 6 illustrates an exemplary processing sequence when an image is provided by the information communication terminal 20 to the image display device 10 in the image display system 1. In the example illustrated in the drawing, suppose that the image display device 10 and the information communication terminal 20 have already established a connection on the intrasystem communication link 30.

The information communication terminal 20 receives an image request from the image display device 10 (SEQ601), and requests correction information from the image display device 10 (SEQ602).

When the image display device 10 is shipped, for example, correction information such as calibration information, correction coefficients, and correction algorithms for correcting color irregularity produced by the virtual image optical unit 210, or correction coefficients (such as gamma correction coefficients and dither coefficients) and correction algorithms used for image correction is written to the ROM 201A. The image display device 10, in response to the request for correction information, reads out correction information from the ROM 201A (SEQ603), and transmits the correction information to the information communication terminal 20 (SEQ604).

Subsequently, the information communication terminal 20 uses the received correction information to conduct a correction process for correcting color irregularity produced by the virtual image optical unit 210 on the requested image, or a correction process for outputting an image signal suited to the micro-display driving method (SEQ605), and transmits the result to the image display device 10 (SEQ606).

Correction information for correcting color irregularity (calibration information, correction coefficients, and correction algorithms) is property information unique to the image display device 10 and based on the optical properties of the optical lens or diffractive optical element used in the virtual image optical unit 210. Also, correction information for image correction (correction coefficients to use (such as gamma correction coefficients and dither coefficients) and correction algorithms) is property information corresponding to the micro-display used in the display panel 209 (in other words, corresponding to the model number). Even if an image is requested by a different image display device, the information communication terminal 20 is able to receive correction information for correcting color irregularity or correction information for image correction every time, and thus may always provide an image without color irregularity to any image display device.

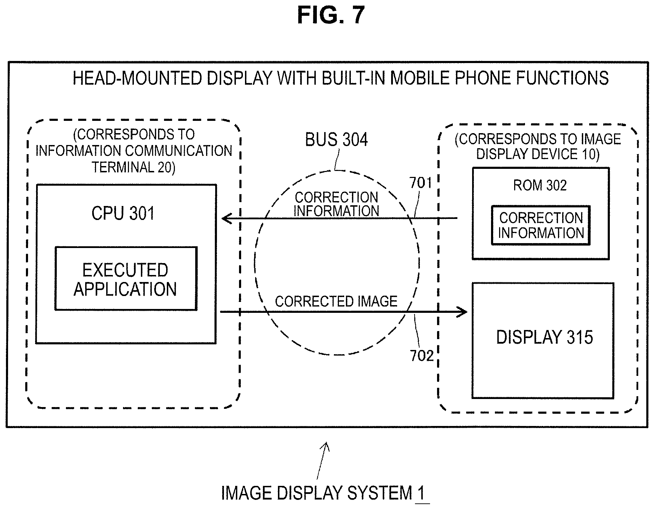

Note that in the case of a head-mounted display with built-in mobile phone functions that combines the image display device 10 and the information communication terminal 20 into a single device as illustrated in FIG. 4, the CPU 301 that is currently executing an application that conducts image display reads out correction information for correcting color irregularity based on the optical properties of the virtual image optical unit 210 (calibration information, correction coefficients, and correction algorithms) or correction information used for image correction (correction coefficients such as gamma correction coefficients and dither coefficients, and correction algorithms) from the ROM 302 (reference number 701), and conducts color irregularity correction computations on an image, as illustrated in FIG. 7, for example. Subsequently, the corrected image is output for display by the display 315 via the bus 304 (reference number 702). Likewise in this case, color irregularity is cancelled out from the enlarged virtual image viewed by the viewer with the virtual image optical unit 210. Also, an image signal suited to the micro-display driving method used as the display panel 209 is provided, and a more natural image is displayed by the display panel 209.

In the processing sequence illustrated in FIGS. 5 and 6, correction information corresponding to the virtual image optical unit 210 of the image display device 10 is presumed to be managed within the image display device 10. In contrast, a case is also anticipated in which property information unique to each device, such as correction information of the virtual image optical unit 210 (calibration information, correction coefficients, and correction algorithms), and property information unique to each model number, such as correction information used for image correction (correction coefficients such as gamma correction coefficients and dither coefficients, and correction algorithms), are centrally managed by a property information management server 50 or the like on the Internet, for example.

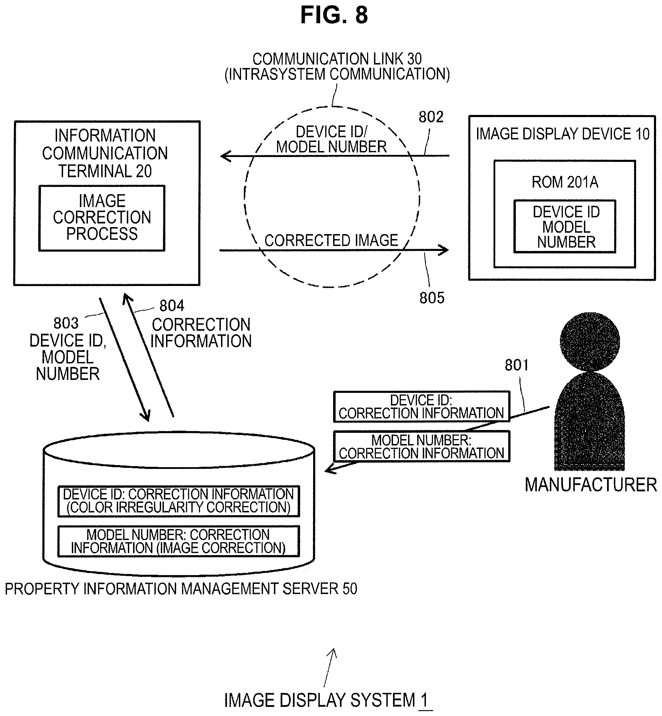

FIG. 8 illustrates exemplary operation in the case of centrally managing correction information of the image display device 10 with a property information management server 50. The manufacturer of the image display device 10 does not write correction information unique to each device or correction information unique to each model number to the ROM 201A at the time of shipping, but instead uploads the correction information to the property information management server 50 (reference number 801). Subsequently, the property information management server 50 associates and manages the received correction information with device identification information (a device ID) or the model number of the corresponding image display device 10.

When requesting an image from the information communication terminal 20, the image display device 10 transmits the device ID or model number read out from the ROM 201A via the communication link 30 (reference number 802). The information communication terminal 20 queries the property information management server 50 with the device ID or model number acquired from the image display device 10 (reference number 803), and is able to acquire the relevant correction information (reference number 804). Subsequently, the information communication terminal 20 conducts computations for color irregularity correction or image correction on the image to transmit to the image display device 10, and transmits image information to the image display device 10 via the communication link 30 (reference number 805). On the image display device 10 side, the received image information is displayed on the display panel 209, enabling the viewer to view an enlarged virtual image with the virtual image optical unit 210. In this enlarged virtual image, color irregularity is cancelled out. Also, an image signal suited to the micro-display driving method used as the display panel 209 is provided, and a more natural image is displayed by the display panel 209.

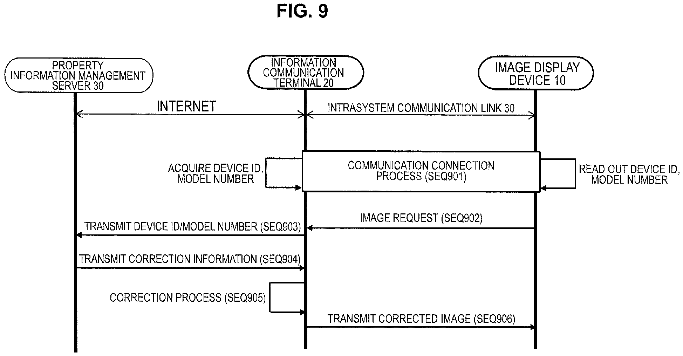

FIG. 9 illustrates an exemplary processing sequence when the information communication terminal 20 uses the property information management server 50 to provide a corrected image to the image display device 10.

The information communication terminal 20, following a communication protocol implemented in the communication link 30, establishes a connection with the image display device 10 via a procedure such as device discovery and authentication (SEQ901). Subsequently, the information communication terminal 10 acquires the device ID or model number of the image display device 10 through a connection process.

The information communication terminal 20, after receiving an image request from the connected image display device 10 (SEQ902), transmits the device ID or model number of the image display device 10 to the property information management server 50, and queries for correction information for color irregularity correction or image correction (SEQ903). If the property information management server 50 is holding correction information corresponding to the device ID or model number, the property information management server 50 replies with this correction information (SEQ904).

The information communication terminal 20 uses the correction information acquired from the property information management server 50 to conduct a correction process for color irregularity correction or image correction on the image that the image display device 10 is requesting (SEQ905). Subsequently, the information communication terminal 20 transmits the corrected image to the image display device 10 (SEQ906).

Correction information for color irregularity correction (calibration information, correction coefficients, and correction algorithms) is information unique to the image display device 10 and based on the optical properties of the optical lens or diffractive optical element used in the virtual image optical unit 210. Meanwhile, correction information for image correction correction coefficients such as gamma correction coefficients and dither coefficients, and correction algorithms) is information unique to each identical product (that is, identical model number) that uses the same micro-display. Even if an image is requested by a different image display device, the information communication terminal 20 is able to query the property information management server 50 and receive correction information for each device or each model number every time, and thus may always provide an image without color irregularity or a natural image suited to the micro-display driving method to any image display device.

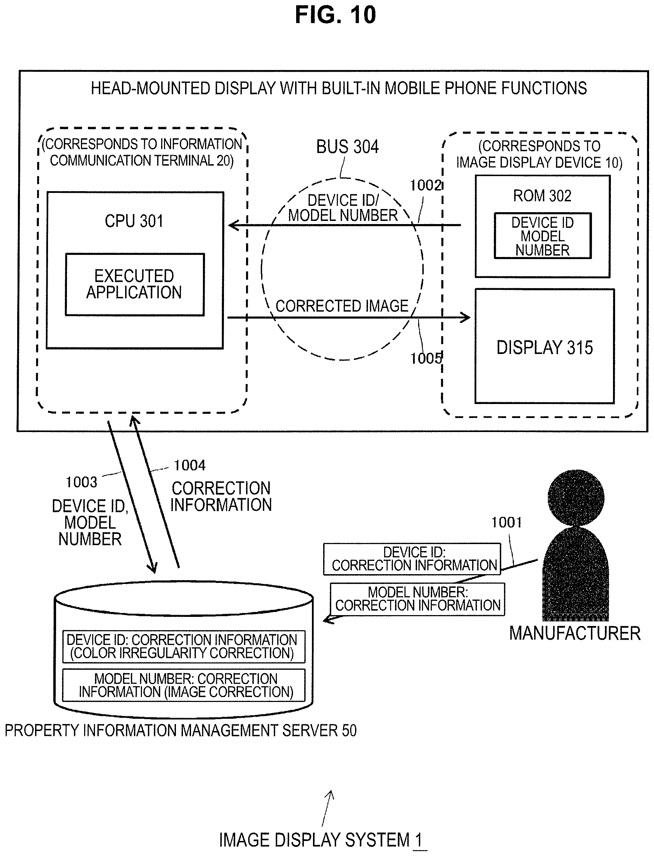

Also, FIG. 10 illustrates exemplary operation in the case of using the property information management server 50 to centrally manage correction information of a head-mounted display with built-in mobile phone functions that combines the image display device 10 and the information communication terminal 20 into a single device as illustrated in FIG. 4. The manufacturer of the head-mounted display does not write correction information unique to each device or correction information unique to each model number to the ROM 302 at the time of shipping, but instead uploads the correction information to the property information management server 50 (reference number 1001). Subsequently, the property information management server 50 associates and manages the received correction information with device identification information (a device ID) or the model number of the corresponding image display device 10 (reference number 1001).

The CPU 301 currently executing an application that conducts image display reads out the device ID or the model number of the relevant device from the ROM 201A (reference number 1002), transmits the device ID or the model number to the property information management server 50 over the Internet (reference number 1003), and queries for correction information for correcting color irregularity and the like due to the optical properties of the virtual image optical unit 210 (calibration information, correction coefficients, and correction algorithms) or correction information used for image correction (correction coefficients such as gamma correction coefficients and dither coefficients, and correction algorithms) (reference number 1004). Subsequently, the CPU 301 conducts color irregularity correction computations using the acquired correction information, and outputs an image for display by the display 315 (reference number 1005). Likewise in this case, color irregularity is cancelled out from the enlarged virtual image viewed by the viewer with the virtual image optical unit 210. Also, an image signal suited to the micro-display driving method used as the display panel 209 is provided, and a more natural image is displayed by the display panel 209.

The correction information for color irregularity correction is property information unique to the image display device 10, computed primarily on the basis of the optical properties of the virtual image optical unit 210. Meanwhile, the correction information for image correction such as gamma correction and dithering is property information unique to each identical product (that is, identical model number) that uses the same micro-display. Furthermore, in the present embodiment, besides correction information for color irregularity correction due to the optical properties of the virtual image optical unit 210 or correction information for image correction corresponding to the micro-display, the image display device 10 is configured to additionally handle, as property information unique to the image display device 10, environmental information about the environment surrounding the device 10 acquired from environmental sensors, such as a light sensor, a microphone, a GPS sensor, a temperature sensor, a humidity sensor, a clock, and an image sensor (camera), correction information (calibration information, correction coefficients, and correction algorithms) for status information acquired from status sensors that measure user status such as the user's work status, action status, mental status, and physiological, such as body temperature sensor, a sweat sensor, a myoelectric sensor, an oculo-electric sensor, and a brain wave sensor, as well as correction information (calibration information, correction coefficients, and correction algorithms) for correcting sensor output information from an environmental sensor or status sensor.

Consequently, even on the information communication terminal 20 side, image information services corresponding to various types of property information may be provided, as exemplified below.

(1) A moving image or still image captured by the image capture unit 316 is subjected to image processing, such as embellishment according to environmental information or status information for the recipient image display device 10, and then transmitted to the image display device 10.
(2) 1seg broadcast content received by the 1seg tuner 308 is subjected to image processing, such as embellishment according to environmental information or status information for the recipient image display device 10, and then transferred to the image display device 10.
(3) A streaming image received via a network by the external network communication unit 317 is subjected to image processing, such as embellishment according to environmental information or status information for the recipient image display device 10, and then transferred to the image display device 10.
(4) Navigation information created by a navigation application executed by the CPU 301 is subjected to image processing, such as embellishment according to environmental information or status information for the recipient image display device 10, and then forwarded to the image display device 10. Navigation information is categorized into various categories, but a weighted selection process for navigation information may be conducted according to environmental information about the location where the image display device 10 is installed, such as temperature or humidity, for example, or alternatively, the mental status or health status of the user wearing the image display device 10.

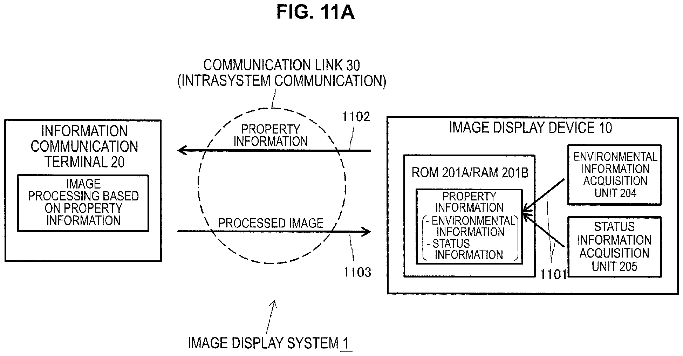

For example, as illustrated in FIG. 11A, the image display device 10 takes environmental information acquired by the environmental information acquisition unit 204 made up of various environmental sensors or user status information acquired by the status information acquisition unit 205 made up of various status sensors, and temporarily stores the information in the RAM 201B as property information unique to the relevant device 10 (reference number 1101). In addition, if an environmental sensor or status sensor is built into the image display device 10, the image display device 10 stores correction information (including calibration information, correction coefficients, and correction algorithms) used to correct output information from these sensors in the ROM 201A as property information.

Subsequently, when requesting an image from the information communication terminal 20, the image display device 10 reads out property information made up of output information from the environmental sensor or status sensor from the RAM 201B, and transmits the property information via the communication link 30 (reference number 1102). Additionally, the image display device 10 also reads out and transmits property information made up of correction information used to correct sensor output information from the ROM 201A as necessary.

In response, the information communication terminal 20 conducts image processing on the requested image according to the received property information, additionally conducts a correction process on the image as necessary, and then transmits the processed image to the image display device 10 via the communication link 30 (reference number 1103). As a result, on the image display device 10 side, an image processed according to the property information is displayed, and the user is able to use an image corresponding to the environment where the user is currently located or the user's own status. For example, the image information services (1) to (4) as discussed above may be provided.

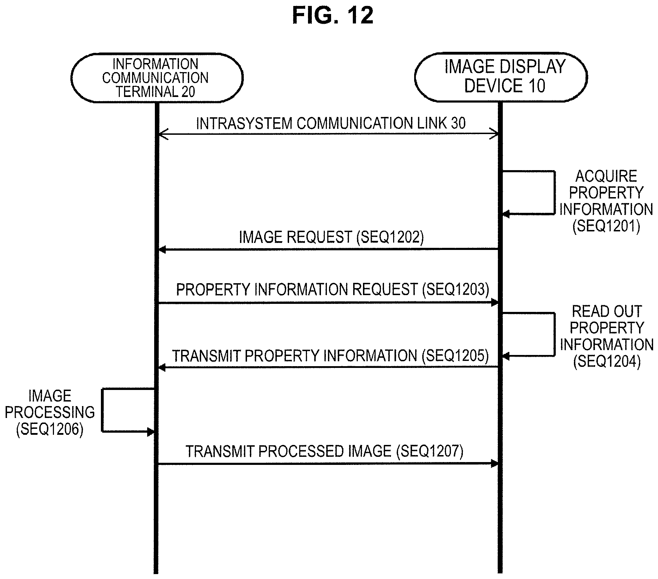

FIG. 12 illustrates an exemplary processing sequence when an image is provided by the information communication terminal 20 to the image display device 10 in the image display system 1. In the example illustrated in the drawing, suppose that the image display device 10 and the information communication terminal 20 have already established a connection on the intrasystem communication link 30.

On the image display device 10 side, at a predetermined timing, the environmental information acquisition unit 204 acquires environmental information while the status information acquisition unit 205 acquires status information, and the acquired information is written to the RAM 201B as property information (SEQ1201).

The information communication terminal 20 receives an image request from the image display device 10 (SEQ1202), and requests property information from the image display device 10 (SEQ1203).

The image display device 10, in response to the request for property information, reads out property information from the RAM 201B (SEQ1204), and transmits the property information to the information communication terminal 20 (SEQ1205). Additionally, the image display device 10 also reads out and transmits property information made up of correction information used to correct sensor output information from the ROM 201A as necessary.

Subsequently, the information communication terminal 20 uses the received property information to conduct a process that adapts the requested image to the property information on the image display device 10 side (SEQ1206), and then transmits the process image to the image display device 10 (SEQ1207).

The property information is environmental information acquired by the environmental information acquisition unit 204 made up of various environmental sensors, or user status information acquired by the status information acquisition unit 205 made up of various status sensors. Also, since correction information used to correct sensor output information is also included in the property information, on the information communication terminal 20 side, calibration or correction may be conducted as necessary on the environmental information or status information received from the image display device 10. Since the information communication terminal 20 provides an image processed according to the property information, on the image display device 10 side, an image processed according to the property information is displayed, and the user is able to use an image corresponding to the environment where the user is currently located or the user's own status. For example, the image information services (1) to (4) as discussed above may be provided.

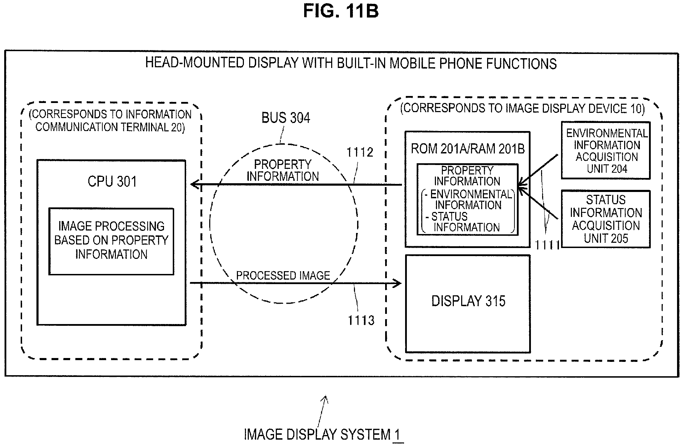

In addition, FIG. 11B illustrates a modification of an image providing service according to status information or environmental information, for the case of a head-mounted display with built-in mobile phone functions that combines the image display device 10 and the information communication terminal 20 into a single device as illustrated in FIG. 4. Environmental information acquired by the environmental information acquisition unit 204 made up of various environmental sensors or user status information acquired by the status information acquisition unit 205 made up of various status sensors is temporarily stored the information in the RAM 201B as property information unique to the relevant device 10 (reference number 1111). In addition, correction information (including calibration information, correction coefficients, and correction algorithms) used to correct output information from these sensors is stored in the ROM 201A as property information.

Subsequently, the CPU 301 executing an application that conducts image display reads out property information made up of output information from the environmental sensor or status sensor from the RAM 201B via the bus 304 (reference number 1112). Additionally, the CPU 301 also reads out and transmits property information made up of correction information used to correct sensor output information from the ROM 201A via the bus 304 as necessary.

Next, the CPU 301 conducts image processing on the requested image according to the received property information, additionally conducts a correction process on the image as necessary, and then outputs via the bus 304 the processed image for display by the image display device 10 (reference number 1113). As a result, an image processed according to the property information is displayed on the display 315, and the user is able to use an image corresponding to the environment where the user is currently located or the user's own status. For example, the image information services (1) to (4) as discussed above may be provided.

Additionally, the present technology may also be configured as below.

(1) An image display device connected to an information communication terminal capable of transmitting and receiving image data, the image display device including:
   a display unit that displays an image;
   an optical system that optically processes an image output from the display unit, or a sensor that detects information related to the image display device or a user of the image display device;
   a property information storage unit that stores property information related to the display unit, the optical system, or the sensor; and
   a transmitting unit that transmits the property information to the information communication terminal and a receiving unit that receives information or an image processed on the basis of the property information on the information communication terminal side, and the processed image.
(2) The image display device according to (1), wherein
   the sensor is at least one of an acceleration sensor, a GPS sensor, a gyro sensor, a velocity sensor, a pressure sensor, a temperature sensor, a sweat sensor, a myoelectric sensor, an oculo-electric sensor, or a radiation sensor, and
   property information related to the display unit, the optical system, or the sensor is calibration information, a correction coefficient, a correction algorithm, or output information from the sensor.
(3) An image display method in an image display device connected to an information communication terminal capable of transmitting and receiving image data, the image display device including a display unit that displays an image, and an optical system that optically processes an image output from the display unit, or a sensor that detects information related to the image display device or a user of the image display device, the image display method including:
   a property information storing step that stores property information related to the display unit, the optical system, or the sensor;
   a transmitting step that transmits the property information to the information communication terminal;
   a receiving step that receives information or an image processed on the basis of the property information on the information communication terminal side; and
   a displaying step that displays the processed image on the display unit.
(4) An image display device connected to an information communication terminal capable of transmitting and receiving image data, the image display device including:
   a display unit that displays an image;
   an optical system that optically processes an image output from the display unit, or a sensor that detects information related to the image display device or a user of the image display device;
   an identification information storage unit that stores identification information unique to the image display device; and
   a control unit that includes a transmitting unit that transmits the identification information to the information communication terminal and a receiving unit that receives information or an image processed using property information related to the display unit, the optical system, or the sensor which is acquired on the basis of the identification information on the information communication terminal side, and causes the display unit to display the processed image.
(5) An image display method in an image display device connected to an information communication terminal capable of transmitting and receiving image data, the image display device including a display unit that displays an image, and an optical system that optically processes an image output from the display unit, or a sensor that detects information related to the image display device or a user of the image display device, the image display method including:
   an identification information storing step that stores identification information unique to the image display device;
   a transmitting step that transmits the identification information to the information communication terminal;
   a receiving step that receives information or an image processed using property information related to the display unit, the optical system, or the sensor which is acquired on the basis of the identification information on the information communication terminal side; and
   a displaying step that displays the processed image on the display unit.
(6) An information communication terminal capable of transmitting and receiving image data and connected to an image display device that includes a display unit that displays an image, and an optical system that optically processes a display image of the display unit, or a sensor that detects information related to the image display device or a user of the image display device, the information communication terminal including:
   a property information acquisition unit that acquires property information related to the display unit, the optical system, or the sensor from the image display device;
   an image processing unit that processes an image to provide to the image display device on the basis of the property information; and
   an image transmitting unit that transmits an image processed by the image processing unit to the image display device.
(7) The information communication terminal according to (6), wherein
   the image display device includes at least one of an acceleration sensor, a GPS sensor, a gyro sensor, a velocity sensor, a pressure sensor, a temperature sensor, a sweat sensor, a myoelectric sensor, an oculo-electric sensor, or a radiation sensor, and
   the property information acquisition unit acquires calibration information, a correction coefficient, or a correction algorithm related to the display unit, the optical system, or the sensor of the image display device, or output information from the sensor, as the property information.
(8) An information communication method of an information communication terminal capable of transmitting and receiving image data and connected to an image display device that includes a display unit that displays an image, and an optical system that optically processes a display image of the display unit, or a sensor that detects information related to the image display device or a user of the image display device, the information communication method including:
   a property information acquiring step that acquires property information related to the display unit, the optical system, or the sensor from the image display device;
   an image processing step that processes an image to provide to the image display device on the basis of the property information; and
   an image transmitting step that transmits an image processed by the image processing step to the image display device.
(9) An information communication terminal capable of transmitting and receiving image data, connected to an image display device that includes a display unit that displays an image, and an optical system that optically processes a display image of the display unit, or a sensor that detects information related to the image display device or a user of the image display device, the information communication terminal including:
   an identification information acquisition unit that acquires identification information unique to the image display device from the image display device;
   an image processing unit that processes an image to provide to the image display device using property information related to the display unit, the optical system, or the sensor of the image display device acquired on the basis of the identification information; and
   an image transmitting unit that transmits an image processed by the image processing unit to the image display device.
(10) An information communication method of an information communication terminal capable of transmitting and receiving image data and connected to an image display device that includes a display unit that displays an image, and an optical system that optically processes a display image of the display unit, or a sensor that detects information related to the image display device or a user of the image display device, the information communication method including:
   an identification information acquiring step that acquires identification information unique to the image display device;
   an image processing step that processes an image to provide to the image display device using property information related to the display unit, the optical system, or the sensor of the image display device acquired on the basis of the identification information; and
   an image transmitting step that transmits an image processed by the image processing step to the image display device.
(11) An image display system including:
   an image display device that includes a display unit that displays an image, an optical system that optically processes a display image of the display unit, or a sensor that detects information related to the image display device or a user of the image display device, and property information related to the optical system or the sensor; and
   an information communication terminal connected to the image display device and capable of transmitting and receiving image data;
   wherein the information communication terminal acquires property information related to the display unit, the optical system, or the sensor from the image display device, and transmits an image processed on the basis of the property information to the image display device.
(12) The image display system according to (11), wherein
   the image display device includes at least one of an acceleration sensor, a GPS sensor, a gyro sensor, a velocity sensor, a pressure sensor, a temperature sensor, a sweat sensor, a myoelectric sensor, an oculo-electric sensor, or a radiation sensor, and
   the information communication terminal acquires calibration information, a correction coefficient, or a correction algorithm related to the display unit, the optical system, or the sensor of the image display device, or output information from the sensor, as the property information.
(13) An image display system including:
   an image display device that includes a display unit that displays an image, an optical system that optically processes a display image of the display unit, or a sensor that detects information related to the image display device or a user of the image display device, and property information related to the optical system or the sensor; and
   an information communication terminal connected to the image display device and capable of transmitting and receiving image data;
   wherein the information communication terminal acquires identification information unique to the image display device from the image display device, and transmits to the image display device an image processed using property information related to the display unit, the optical system, or the sensor acquired on the basis of the identification information.

### Citation List

### Patent Literature

Patent Literature 1: JP 2012-141461A
Patent Literature 2: JP 2009-36955A
Patent Literature 3: JP 2008-258802A
Patent Literature 4: US 2007/0046805
Patent Literature 5: US 2012/0200592
Patent Literature 6: WO 2012/060039

### Industrial Applicability

The foregoing thus describes the technology disclosed in this specification in detail and with reference to specific embodiments. However, it is obvious that persons skilled in the art may make modifications and substitutions to these embodiments without departing from the technology disclosed in this specification.

Although head-mounted image display devices may be categorized into opaque and see-through types, the technology disclosed in this specification may be applied to either of these types. Furthermore, although head-mounted image display devices may be categorized into a binocular type equipped with a display unit for both the left and right eyes, or a monocular type equipped with a display unit for only one of either left or right, the technology disclosed in this specification may be applied to either of these types.

In addition, although a multifunctional mobile terminal such as a smartphone is given as an example of the information communication terminal, various other information technology equipment capable of externally outputting image information may be used as the information communication terminal.

Essentially, the technology disclosed in this specification has been described by way of example, and the stated content of this specification should not be interpreted as being limiting.

### Reference Signs List

- 1: image display system
- 10: image display device (head-mounted display)
- 20: information communication terminal (multifunctional mobile terminal)
- 201: control unit
- 201A: ROM
- 201B: RAM
- 202: input operating unit
- 203: remote control receiving unit
- 204: environmental information acquisition unit
- 205: status information acquisition unit
- 206: intrasystem communication unit
- 207: video processing unit
- 208: display driving unit
- 209: display panel
- 210: virtual image optical unit
- 301: CPU
- 302: ROM
- 303: RAM
- 304: bus
- 305: storage unit
- 306: mobile telephony transmitting/receiving unit
- 307: intrasystem communication unit
- 308: 1seg tuner
- 309: operating unit
- 310: LED
- 311: vibrator
- 312: audio input/output control unit
- 313: microphone
- 314: speaker
- 315: display
- 316: image capture unit

## Claims

1. An image display device (10) connectable to an information communication terminal (20) capable of transmitting and receiving image data, the image display device comprising:
a display unit that is arranged to display an image;
an optical system that is arranged to optically process an image output from the r display unit (210) enabling a user to view the display image as an enlarged virtual image;
sensors that are arranged to detect information related to the image display device and the user of the image display device, wherein the sensors are environmental sensors (204) providing environmental information and status sensors (205) providing status information of the user;
a property information storage unit that is arranged to store property information related to the display unit, the optical system, and the sensors; and
a control unit (201) that includes a transmitting unit that is arranged to transmit the property information to the information communication terminal and a receiving unit that is arranged to receive information or an image processed on the basis of the property information on the information communication terminal side, and causes the display unit to display the processed image,
**characterized in that** the image display device is a micro-display (209),
wherein the property information is
environmental information about the environment surrounding the image display device acquired from the environmental sensors (204),
correction information including calibration information, correction coefficients, and correction algorithms for the status information acquired by the status sensors (205), and
correction information including calibration information, correction coefficients, and correction algorithms for correcting sensor output information from an environmental sensor or a status sensor,
wherein the property information further is
correction information for color irregularity correction due to the Optical properties of the virtual image optical unit (210), or
correction information for image correction corresponding to the micro-display (209).

2. The image display device according to claim 1, wherein
the sensors comprise an acceleration sensor, a GPS sensor, a gyro sensor, a velocity sensor, a pressure sensor, a temperature sensor, a sweat sensor, a myoelectric sensor, an oculo-electric sensor, or a radiation sensor.

3. An image display method in an image display device (10) according to claim 1, the image display method comprising:
a property information storing step that stores property information related to the display unit, the optical system and the sensors;
a transmitting step that transmits the property information to the information communication terminal;
a receiving step that receives information or an image processed on the basis of the property information on the information communication terminal side; and
a displaying step that displays the processed image on the display unit,
**characterized in that** the image display device is a micro-display (209),
wherein the property information is
environmental information about the environment surrounding the image display device acquired from the environmental sensors (204),
correction information including calibration information, correction coefficients, and correction algorithms for the status information acquired by the status sensors (205), and
correction information including calibration information, correction coefficients, and correction algorithms for correcting sensor output information from an environmental sensor or a status sensor,
wherein the property information further is
correction information for color irregularity correction due to the optical properties of the virtual image optical unit (210), or
correction information for image correction corresponding to the micro-display (209).

## Patentansprüche

1. Bilddisplayeinrichtung (10), verbindbar mit einem Informationskommunikationsterminal (20), das Bilddaten übertragen und empfangen kann, wobei die Bilddisplayeinrichtung Folgendes umfasst:
eine Displayeinheit, die ausgelegt ist zum Anzeigen eines Bilds;
ein optisches System, das ausgelegt ist zum optischen Verarbeiten eines von der Displayeinheit (210) ausgegebenen Bilds, was es einem Benutzer ermöglicht, das Displaybild als ein vergrößertes virtuelles Bild zu betrachten; Sensoren, die ausgelegt sind zum Detektieren von Informationen bezüglich der Bilddisplayeinrichtung und des Benutzers der Bilddisplayeinrichtung, wobei die Sensoren Umgebungssensoren (204) sind, die Umgebungsinformationen liefern, und Statussensoren (205), die Statusinformationen über den Benutzer liefern;
eine Eigenschaftsinformationsablageeinheit, die ausgelegt ist zum Speichern von Eigenschaftsinformationen bezüglich der Displayeinheit, des optischen Systems und der Sensoren; und
eine Steuereinheit (201), die eine Übertragungseinheit enthält, die ausgelegt ist zum Übertragen der Eigenschaftsinformationen an das Informationskommunikationsterminal, und eine Empfangseinheit, die ausgelegt ist zum Empfangen von Informationen oder eines auf Basis der Eigenschaftsinformationen verarbeiteten Bilds auf der Informationskommunikationsterminalseite, und bewirkt, dass die Displayeinheit das verarbeitete Bild anzeigt,
**dadurch gekennzeichnet, dass** die Bilddisplayeinrichtung ein Microdisplay (209) ist,
wobei es sich bei den Eigenschaftsinformationen um Folgendes handelt:
Umgebungsinformationen über die die Bilddisplayeinrichtung umgebende Umgebung, erfasst von den Umgebungssensoren (204),
Korrekturinformationen einschließlich Kalibrierungsinformationen, Korrekturkoeffizienten und Korrekturalgorithmen für die durch die Statussensoren (205) erfassten Statusinformationen, und
Korrekturinformationen einschließlich Kalibrierungsinformationen, Korrekturkoeffizienten und Korrekturalgorithmen zum Korrigieren von Sensorausgabeinformationen von einem Umgebungssensor oder einem Statussensor,
wobei es sich bei den Eigenschaftsinformationen weiterhin um Folgendes handelt:
Korrekturinformationen für eine Farbunregelmäßigkeitskorrektur aufgrund der optischen Eigenschaften der optischen Virtuelle-Bild-Einheit (210) oder Korrekturinformationen für eine Bildkorrektur entsprechend dem Microdisplay (209).

2. Bilddisplayeinrichtung nach Anspruch 1, wobei
die Sensoren einen Beschleunigungssensor, einen GPS-Sensor, einen Kreiselsensor, einen Geschwindigkeitssensor, einen Drucksensor, einen Temperatursensor, einen Schweißsensor, einen myoelektrischen Sensor, einen oculo-elektrischen Sensor oder einen Strahlungssensor umfassen.

3. Bilddisplayverfahren in einer Bilddisplayeinrichtung (10) nach Anspruch 1, wobei das Bilddisplayverfahren Folgendes umfasst:
einen Eigenschaftsinformationsspeicherschritt, der Eigenschaftsinformationen bezüglich der Displayeinheit, des optischen Systems und der Sensoren speichert;
einen Übertragungsschritt, der die Eigenschaftsinformationen zu dem Informationskommunikationsterminal überträgt;
einen Empfangsschritt, der Informationen oder ein auf Basis der Eigenschaftsinformationen verarbeitetes Bild auf der Informationskommunikationsterminalseite empfängt; und
einen Anzeigeschritt, der das verarbeitete Bild auf der Displayeinheit anzeigt,
**dadurch gekennzeichnet, dass** die Bilddisplayeinrichtung ein Microdisplay (209) ist,
wobei es sich bei den Eigenschaftsinformationen um Folgendes handelt:
Umgebungsinformationen über die die Bilddisplayeinrichtung umgebende Umgebung, erfasst von den Umgebungssensoren (204),
Korrekturinformationen einschließlich Kalibrierungsinformationen, Korrekturkoeffizienten und Korrekturalgorithmen für die durch die Statussensoren (205) erfassten Statusinformationen, und
Korrekturinformationen einschließlich Kalibrierungsinformationen, Korrekturkoeffizienten und Korrekturalgorithmen zum Korrigieren von Sensorausgabeinformationen von einem Umgebungssensor oder einem Statussensor,
wobei es sich bei den Eigenschaftsinformationen weiterhin um Folgendes handelt:
Korrekturinformationen für eine Farbunregelmäßigkeitskorrektur aufgrund der optischen Eigenschaften der optischen Virtuelle-Bild-Einheit (210) oder Korrekturinformationen für eine Bildkorrektur entsprechend dem Microdisplay (209).

## Revendications

1. Dispositif d'affichage d'image (10) pouvant être connecté à un terminal de communication d'informations (20) capable de transmettre et de recevoir des données d'image, le dispositif d'affichage d'image comprenant :
une unité d'affichage qui est arrangée pour afficher une image ;
un système optique qui est arrangé pour traiter optiquement une image délivrée en sortie par l'unité d'affichage (210) permettant à un utilisateur d'afficher l'image sous la forme d'une image virtuelle agrandie ;
des capteurs qui sont arrangés pour détecter des informations relatives au dispositif d'affichage d'image et à l'utilisateur du dispositif d'affichage d'image, où les capteurs sont des capteurs environnementaux (204) fournissant des informations environnementales et des capteurs d'état (205) fournissant des informations d'état de l'utilisateur ;
une unité de stockage d'informations de propriété qui est arrangée pour stocker des informations de propriété relatives à l'unité d'affichage, au système optique ou aux capteurs ; et
une unité de commande (201) qui comprend une unité de transmission qui est arrangée pour transmettre les informations de propriété au terminal de communication d'informations et une unité de réception qui est arrangée pour recevoir des informations ou une image traitée sur la base des informations de propriété du côté du terminal de communication d'informations, et qui amène l'unité d'affichage à afficher l'image traitée,
**caractérisé en ce que** le dispositif d'affichage d'image est un micro-affichage (209), où les informations de propriété sont :
des informations environnementales sur l'environnement entourant le dispositif d'affichage d'image acquises par les capteurs environnementaux (204),
des informations de correction comprenant des informations de calibrage, des coefficients de correction et des algorithmes de correction pour les informations d'état acquises par les capteurs d'état (205), et
des informations de correction comprenant des informations de calibrage, des coefficients de correction et des algorithmes de correction pour corriger les informations de sortie de capteur provenant d'un capteur environnemental ou d'un capteur d'état,
où les informations de propriété sont en outre
des informations de correction pour la correction de l'irrégularité des couleurs due aux propriétés optiques de l'unité optique d'image virtuelle (210) ou des informations de correction pour une correction d'image correspondant au micro-affichage (209).

2. Dispositif d'affichage d'image selon la revendication 1, dans lequel
les capteurs comprennent un capteur d'accélération, un capteur GPS, un capteur gyroscopique, un capteur de vitesse, un capteur de pression, un capteur de température, un capteur de transpiration, un capteur myoélectrique, un capteur oculo-électrique ou un capteur de rayonnement.

3. Procédé d'affichage d'image dans un dispositif d'affichage d'image (10) selon la revendication 1, le procédé d'affichage d'image comprenant les étapes suivantes :
une étape de stockage d'informations de propriété qui stocke des informations de propriété relatives à l'unité d'affichage, au système optique et aux capteurs ;
une étape de transmission qui transmet les informations de propriété au terminal de communication d'informations ;
une étape de réception qui reçoit des informations ou une image traitée sur la base des informations de propriété du côté du terminal de communication d'informations ; et
une étape d'affichage qui affiche l'image traitée sur l'unité d'affichage,
**caractérisé en ce que** le dispositif d'affichage d'image est un micro-affichage (209), où les informations de propriété sont :
des informations environnementales sur l'environnement entourant le dispositif d'affichage d'image acquises par les capteurs environnementaux (204),
des informations de correction comprenant des informations de calibrage, des coefficients de correction et des algorithmes de correction pour les informations d'état acquises par les capteurs d'état (205), et
des informations de correction comprenant des informations de calibrage, des coefficients de correction et des algorithmes de correction pour corriger les informations de sortie de capteur provenant d'un capteur environnemental ou d'un capteur d'état,
où les informations de propriété sont en outre des informations de correction pour la correction de l'irrégularité des couleurs due aux propriétés optiques de l'unité optique d'image virtuelle (210) ou des informations de correction pour une correction d'image correspondant au micro-affichage (209).
